# EUROPEAN PATENT SPECIFICATION

(11) **EP 0 833 726 B1**
(45) Date of publication and mention of the grant of the patent: **29.08.2001**
(21) Application number: 96917188.3
(22) Date of filing: 04.06.1996
(51) Int. Cl.: B28B 1/52, F23D 14/14

(54) **PERFORATED CERAMIC FIBER PLATE AND FILTER AND METHOD FOR PRODUCING THIS PLATE**
PERFORIERTE KERAMIKFASERPLATTE UND FILTER UND VERFAHREN ZUR HERSTELLUNG DIESER PLATTE
PLAQUE DE FIBRES CERAMIQUES PERFOREE, FILTRE ET PROCEDE DE FABRICATION DE CETTE PLAQUE

(30) Priority: 06.06.1995 US 467227; 06.06.1995 US 466453
(43) Date of publication of application: 08.04.1998
(73) Proprietor: ALZETA CORPORATION, Santa Clara, CA 95054-1008 (US)
(72) Inventor: CARSWELL, Martin, G., San Jose, CA 95125 (US)
(74) Representative: Schupfner, Gerhard D., Dr. Dipl.-Chem.
(86) International application number: US9608917
(87) International publication number: WO9639288

(56) References cited:
- US-A- 4 504 218
- US-A- 4 569 657
- US-A- 4 673 349
- US-A- 5 057 006

## Description

### BACKGROUND OF THE INVENTION

This invention relates to a process of forming perforated ceramic fiber plates. More particularly, the invention is directed to the production of perforated ceramic fiber plates wherein the perforations are of small diameter and are closely spaced from one another.

Perforated ceramic plates of various configurations and compositions have been disclosed in numerous patents. U.S. Patents 3,954,387 to Cooper, 4,504,218 to Mihara et al, and 4,673,349 to Abe et al are illustrative of the varieties of compositions and configurations of perforated ceramic plates that have been proposed. An important use of perforated ceramic plates is as burner faces of gas burners.

Domestic water heaters commonly have vertical cylindrical water tanks with diameters of at least 30.5cm (12 inches), most frequently in the range of about 36 to 46cm (14 to 18 inches), and metal gas burners positioned below the bottoms of the water tanks. Such water heaters represent a large potential market for perforated ceramic plates if made capable of serving as gas burner plates in lieu of conventional metal gas burners. The advantage of perforated ceramic plates for water heaters is maximized if they can function as flameless infrared burners emitting radiant energy directly to the bottoms of the upright water tanks. For practical burner use, the thickness of perforated ceramic plates should be not more than about 13cm (0.5 inch).

There are many difficult requirements imposed on perforated ceramic plates if they are to function as infrared burners under the water tanks of domestic water heaters. The metal gas burners conventionally used with water heaters have been designed for blue flame combustion at a firing rate of at least 11.7 kWh [40,000 BTU (British Thermal Units) per hour]. For a perforated ceramic plate to replace the metal burner, it must be operable at a firing rate of at least 11.7kWh (40,000 BTU per hour), preferably about 14.6kWh (50,000 BTU per hour). Such operation makes it necessary that the perforations are not more than 20mm (0.8 inch) in diameter to prevent flash back, and are so closely spaced that the perforated area is at least 25% of the burner plate area to minimize pressure drop for naturally inspirated operation with low-pressure (e.g., 10cm (4 inches) water column) natural gas.

Consequently, these parameters require a burner plate with at least 0.093 m² (one square foot) of its face containing the aforesaid closely spaced small perforations to permit a firing rate of at least 11.7kWh (40,000 BTU per hour). The ceramic burner plate must also have sufficient strength to enable an unsupported plate span of at least 30.5cm (12 inches) to resist sagging and fracturing during extended use as an infrared burner. The inclusion of ceramic fibers in such a burner plate is indispensable for strength.

A search of the technical literature reveals that the production of large, closely perforated ceramic fiber plates from an aqueous suspension of the chopped fibers has previously not even been attempted, probably because of the multiple difficult requirements such plates must meet to serve as infrared burner plates.

The aforesaid patents of Mihara et al and Abe et al mention perforated plates with dimensions ranging from approximately 7.6cm (3 inches) by 10.1cm (4 inches) to less than 20.3cm (8 inches) by 20.3cm (8 inches). Worse yet, correspondence with the companies that own these patents has revealed that the patented products are not available because they are not being manufactured. The burner plates of the patent to Cooper are available from the patent owner but the technical data supplied by the owner shows that the largest plate offered is approximately 19.6cm (7.7 inches) by 13.9cm (5.5 inches). In summary, the largest perforated ceramic fiber plate mentioned in the aforesaid patents is nearly 100 cm² (62 square inches) but the only commercially available perforated plate is offered in the form of rectangles in sizes ranging from 61.3cm² (9.5 square inches) to 272 cm² (42.2 square inches).

Accordingly, a principal object of the invention is to provide a simple and rapid process of producing highly perforated ceramic fiber plates.

Another important object is to provide a commercially attractive process for vacuum-forming large, highly perforated ceramic fiber plates.

Still a further object is to enhance the economic attractiveness of such a process by eliminating the usual sintering of ceramic products.

An additional important object is to provide apparatus for the vacuum-forming of highly perforated ceramic fiber plates.

These and other features and advantages of the invention will be apparent from the description which follows.

### SUMMARY OF THE INVENTION

In accordance with this invention, a highly perforated ceramic fiber plate is produced by vacuum-drawing a uniform suspension of chopped ceramic fibers in an aqueous acidic dispersion of colloidal alumina or colloidal silica through a perforated filter base having pins projecting through and beyond the perforations of the filter base which may be porous and/or have a second group of tiny perforations without pins for the flow of liquid therethrough aided by the applied vacuum.

The pins are set in a flat bed in an arrangement identical to that of the perforations in the filter base which is the arrangement of perforations desired in the ceramic fiber plate to be vacuum-formed thereon; perforations preferably have a diameter in the range of about 1.27 to 2mm (0.05 to 0.08 inch). For example, highly perforated ceramic fiber plates with perforations 1.9mm (0.075 inch) in diameter and spaced 3.3mm (0.13 inch) (center to center) from one another will have about 10,000 perforations per 0.0929 m² (square foot) of plate or about 30% perforation area. The pins do not have a tight fit in the perforations of the filter base so that liquid inevitably leaks around the pins and thus aids filtration. Moreover, repeated reciprocation of the pins through the perforations in the filter base leads to wear that beneficially increases liquid flow around the pins. As soon as the filtered fibers form a compact layer or pad of the desired thickness, vacuum-drawing of the aqueous suspension of chopped fibers is terminated by stopping the supply thereof to the perforated filter base.

Vacuum is desirably maintained on the filter base with the fiber layer deposited thereon for a short period, usually less than a minute, after the supply of the aqueous suspension of chopped ceramic fibers has been cut off, to draw air through the compact fiber pad and thus displace excess liquid therefrom. The application of vacuum is then stopped and the pins are fully withdrawn from the fiber pad by pulling the base with the pins and the perforated filter base away from each other. It is a surprising and important property of the specific formulation of chopped ceramic fiber suspension used to vacuum-form the compact perforated fiber layer that the pins can be withdrawn from the wet fiber layer and leave well formed perforations.

The cohesiveness of the wet perforated layer of chopped ceramic fibers is such that the wet fiber layer can be transferred from the perforated filter base to a tray for placement in a drying oven without damage or distortion of the wet perforated fiber layer.

A significant economic advantage of the formulation that was developed to produce highly perforated ceramic fiber plates (perforations not more than 2 mm (0.08 inch) in diameter, closely spaced not more than 3.8 mm (0.15 inch) from center to center) makes it possible to dry the wet perforated fiber layer at a temperature of only about 232°C (450°F). into a strong stiff plate that is capable of spanning more than 30.5cm (one foot) without sagging even when functioning as an infrared radiant burner. By contrast, ceramic plates, perforated or not, have heretofore involved sintering at temperatures of about 538°C (1000°F). and higher. Such higher temperature treatment is not only expensive but also is attended by problems of shrinkage and warping of the ceramic plates.

While the perforated ceramic fiber plate simply dried at a temperature of 232°C (450°F.) in less than an hour, usually 45 minutes, is serviceable as an infrared burner, it contains water-sensitive matter if colloidal alumina was used in the formulation. In such case, to protect the perforated plate against damage from contact with water, drying of the moist filter layer may be conducted at a higher temperature of about 343°C (650°F.) to eliminate the water of hydration, i.e., colloidal alumina monohydrate (AlOOH) is converted into insoluble alumina (Al₂O₃) thus:

2 AlOOH→Al₂O₃+H₂O

However, it is preferable to avoid even the modest high temperature required for dehydration, by impregnating the dried plate with a basic solution of colloidal silica and returning the coated plate to the drying oven operating at a temperature of about 232°C (450°F.) to dry the plate. The colloidal silica may be applied by brushing or spraying the basic solution. When the plate has dried, the perforated ceramic fiber plate is fully protected against damage from contact with water.

If an aqueous acidic dispersion of colloidal silica is used as the binding agent in lieu of colloidal alumina, drying the wet perforated fiber layer at a temperature of about 232°C (450°F.) yields a strong stiff plate that requires no further treatment inasmuch as it is, unlike colloidal alumina, not susceptible to water damage.

### BRIEF DESCRIPTION OF THE DRAWINGS

To facilitate the further description and understanding of the invention, reference will be made to the accompanying drawings, of which:
FIG. 1 is a sectional elevation of the mold used for the vacuum-forming of the closely spaced perforated ceramic fiber plate of the invention.
FIG. 2 is a sectional elevation of the mold of FIG. 1 combined with tubes for supplying the liquid suspension of chopped ceramic fibers to the mold and for vacuum-drawing liquid down through the mold to deposit a compact layer or pad of chopped fibers on the filter or casting face of the mold; and
FIG. 3 is a magnified representation (drawn to scale) of a small portion of the casting face of the mold.

### DESCRIPTION OF A PREFERRED EMBODIMENT

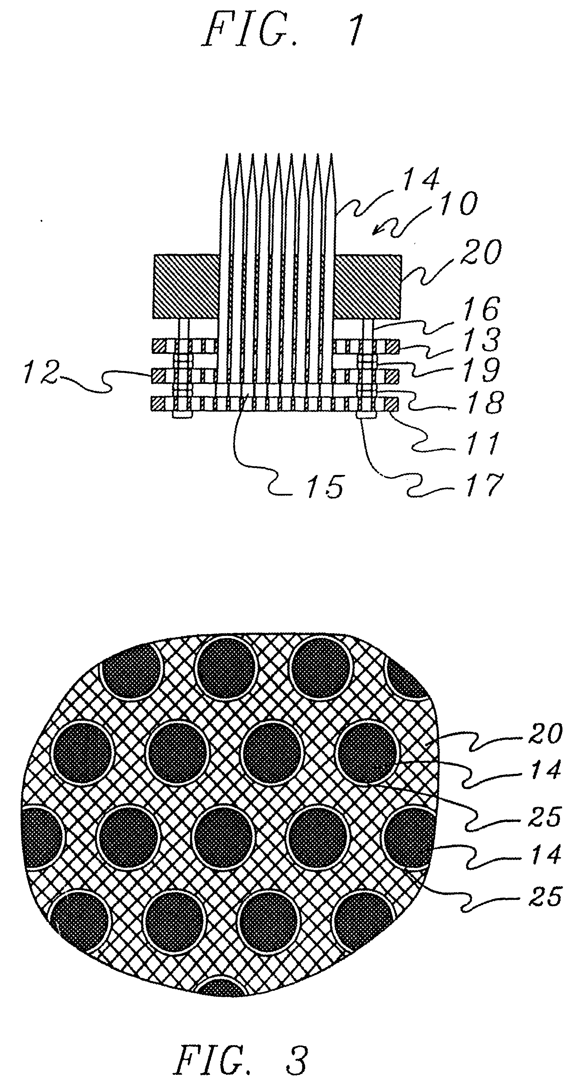

FIG. 1 is a sectional elevation of the vacuum-forming mold used to produce the closely spaced perforated ceramic fiber plate of the invention. Mold 10 has three circular disks 11, 12, 13 which have perforations, spaced 3.3 mm (0.1295 inch) center-to-center, corresponding to 69 perforations per 64.5 mm² (square inch) of disk. The diameter of the perforations of disks 11, 12 is 1.98 mm (0.078 inch) and that of disk 13 is 2.26 mm (0.089 inch). Pins 14 (0.078 inch diameter) pass up through the perforations of disk 12 by disk 11. Several screw posts 16 (only two shown in FIG. 1) pass through disks 11, 12, 13. Disk 11 is clamped between screw heads 17 of posts 16 and nuts 18, while disk 12 is clamped between nuts 18 and nuts 19. Thus, pins 14, disks 11, 12 and posts 16 are locked together by nuts 18, 19. Disk 13 slips over pins 14 and posts 16 and rests on nuts 19.

Perforated filter base or casting base disk 20 is porous having been formed by sintering polymethylmethacrylate beads. Base disk 20 has perforations (2.26 mm) (0.089 inch diameter) like those of disk 13 so that both disks 13, 20 can be easily slipped up and down on pins 14. It is to be noted that filter or casting base disk 20 is not perforated to slip over posts 16; in other words, disk 20 rests on the ends of posts 16. While this is the original configuration of the apparatus of the invention, subsequent tests indicated that disk 13 is not necessary as will be explained hereinafter.

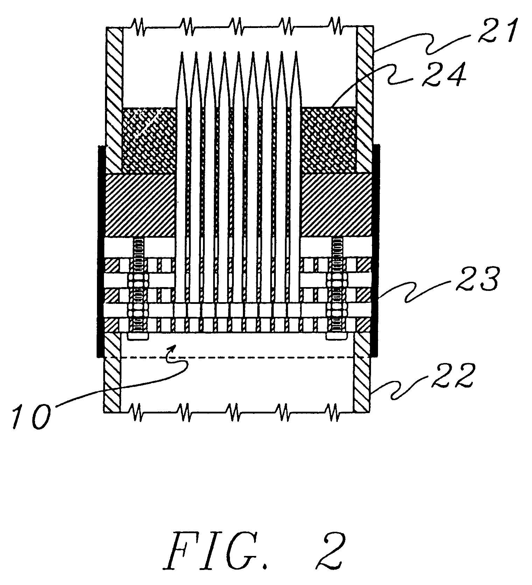

FIG. 2 is a sectional elevation of vacuum-forming mold 10 between upper tube 21 into which the suspension of chopped ceramic fibers is poured and lower tube 22 through which liquid passing through mold 10 drains. A tight sleeve 23 provides a seal not only around mold 10 but also between mold 10 and tubes 21, 22 at its opposite ends. A vacuum pump (not shown) is connected to tube 22 to draw liquid rapidly through the pores of casting base disk 20 as well as through the annular clearances between pins 14 (1.98mm) (0.078 inch diameter) and the perforations (2.26 mm) (0.089 inch diameter) of disk 20. The resulting filtration of the chopped fiber suspension leaves a compact layer or pad 24 of chopped ceramic fibers around pins 14. When layer 24 of chopped ceramic fibers reaches the desired thickness, say 13 mm (0.5 inch), the supply of the colloidal alumina and chopped fiber suspension to tube 21 is stopped.

Sleeve 23 is removed to disconnect mold 10 from tubes 21, 22. While locked disks 11, 12 are held stationary, disk 13 is pushed up against base disk 20 and both disks 13, 20 are pushed up until the top face of disk 20 is aligned with the tips of pins 14. Thus, pins 14 have been completely removed from contact with the vacuum-formed perforated chopped ceramic fiber pad 24 resting on base disk 20. It is an important feature of the invention that this perforated pad 24 of chopped ceramic fibers can be transferred from base disk 20 to a tray without any distortion or damage. As previously mentioned, the perforated ceramic fiber pad on the tray is placed in a drying oven to convert the wet deformable fiber pad into a dry rigid perforated plate.

To vacuum-form another perforated chopped ceramic fiber pad, disks 13, 20 are simply pulled down on pins 14 until disk 13 rests on nuts 19 and disk 20 rests on posts 16. Sleeve 23 is again used to surround mold 10 and connect it to tubes 21, 22.

The apparatus is thus ready for the reintroduction of the aqueous colloidal alumina suspension of chopped ceramic fibers into tube 21 and the vacuum-drawing thereof through mold 10 into tube 22 to form a compact pad 24 of chopped fibers on base disk 20 around pins 14.

FIG. 3 is a magnified scale diagram of a very small portion about (1.3cm²) (about 0.2 square inch) of the casting face of base disk 20 showing the spacing of several complete perforations with pins 14 positioned therein. The perforations and pins 14 are drawn to an enlarged scale to show the narrow annular clearance 25 between each pin 14 and disk 20. Inasmuch as the diameter of the perforations is 2.26 mm (0.089 inch)and that of pins 14 is 1.98 mm (0.078 inch), the width of annular clearance 25 is 0.14 mm (0.0055 inch). Clearances 25, representing about 10% of the casting face area, greatly facilitate the flow of the liquid from the chopped fiber suspension down therethrough and leave a compact layer of chopped fibers around pins 14 on disk 20.

The peripheral portion of porous disk 20 which is not perforated permits the drainage of liquid therethrough and the deposition of compact chopped fibers so that the perforated pad of chopped fibers vacuum-formed on disk 20 has a narrow peripheral rim that is not perforated. The rim portion of the perforated ceramic fiber plate produced by the invention requires no perforations because this narrow rim portion is covered by clamping means when the perforated plate is installed as the face of an infrared gas burner.

Originally, disk 13 was made a part of mold 10 as a precaution to help push porous disk 20 upward when a fiber pad had been formed thereon. It had been thought that porous disk 20 might be too weak to permit being pushed up on pins 14 by itself. However, as tests continued it became evident that disk 20 could be easily pushed up on pins 14 without the support of disk 13.

In fact, it was further realized that the drainage of liquid around each pin was sufficient to form the compact pad of chopped fibers around pins 14 on a base disk 20 that was not porous. Hence, disk 13 is clearly unnecessary and disk 20 can be formed of an impervious rigid sheet, the rim portion of which must be provided with tiny perforations for the drainage of liquid and the deposition thereon of compact chopped fibers as the un-perforated rim portion of the perforated fiber pad.

It will be observed in FIGS. 1 and 2 that the liquid which filters through porous base disk 20 as well as through the annular clearances between pins 14 and disk 20 can drain freely from mold 20 through the perforations in disks 11, 12, 13 that are not filled by pins 14. The description of mold 10 has made it clear that mold 10 has only two simple, basic components: a base holding a myriad of closely spaced pins and a perforated filter or casting base that can be moved up and down the pins. The simplicity of the apparatus and its effectiveness in producing strong, compact pads of chopped ceramic fibers is truly surprising when one looks at FIG. 3 and tries to visualize 74 pins 14 per 645 mm² (square inch) of casting base 20.

While the invention has been described with reference to the production of circular perforated ceramic fiber plates, it is easily adapted to the production of perforated plates of other shapes, such as rectangular, hexagonal and oval, by making the shape of the mold the same as that of the desired perforated plate to be vacuum-formed thereon. Also, while mold 10 is shown in FIG. 2 with tube 21 for supplying the aqueous suspension of chopped ceramic fibers to casting base 20, the same apparatus may be inverted and at least tube 21 immersed in the suspension so that the vacuum applied to tube 22 will draw the suspension against base 20 to deposit chopped ceramic fibers thereagainst as liquid filters up through mold 10 into tube 22. When the perforated fiber pad on base 20 has the desired thickness, the apparatus is lifted so that tube 21 is no longer immersed in the suspension of chopped fibers.

In a specific example of the invention, the suspension of chopped ceramic fibers is prepared by mixing 52 grams of glacial acetic acid per 3.8 liters (gallon) of water. To this acidic solution is added with stirring colloidal alumina at the rate of 120 grams per 3.8 liters (gallon) of solution and 108 grams of aluminum nitrate are added thereto. Alumina-silica fibers which have been intensely comminuted or chopped so that substantially all of the fiber segments are no longer than about 2.54 mm (0.10 inch), many being less than half as long, are uniformly dispersed in the acidic solution of colloidal alumina at the rate of 125 grams per 3.8 liters (gallon). Such short fiber segments are necessary to ensure that vacuum-drawing the suspension thereof will cause the fiber segments to move down freely between the pins of the mold and form a compact fiber pad surrounding all the pins.

It is another surprising feature of the invention that, in spite of the unusually short fiber segments, the perforated ceramic plate vacuum-formed therewith has remarkable strength. In fact, by using a large mold, circular perforated ceramic fiber plates with a diameter of 41.9 cm (16.5 inches), a thickness of 13 mm (0.5 inch), and 69 perforations (1.98 mm) (0.078 inch diameter) per 645 mm² (square inch) of the plate, except for a peripheral rim 4.5 cm (1.75 inches) wide left un-perforated, have been produced and have proved strong enough to perform as infrared gas burners under water heaters when each plate is supported solely along its narrow un-perforated rim. Of course, the mold only formed compact fiber pads that were dried at a temperature of 232°C (450°F.) and the resulting dried plates were then protected against water damage by immersion in a basic solution of colloidal silica and by drying the silica-impregnated plates at a temperature of 232°C (450°F.)

Performance tests with thus produced, large circular (41.9 cm) (16.5 inch diameter), perforated ceramic fiber plates as infrared burners of water heaters were conducted by injecting low-pressure (10 cm) (4 inches)water column) natural gas into a venturi to inspirate at least 110% stoichiometric combustion air. A firing rate of about 11.7kWH (40,000 BTU per hour) maintained the discharge face of the ceramic plate in a flameless radiant state and yielded a combustion product gas containing very small quantities of air pollutants (nitrogen oxides, carbon monoxide and unburned hydrocarbons). The use of such a large circular burner with a water heater is described in assignee's pending application Serial No. 08/299,360, filed September 1, 1994, now U.S. Patent No. 5,494,003.

Besides the performance tests which confirmed that the perforated ceramic fiber plates of the invention are strong enough to resist sagging and fracturing when functioning as infrared gas burners that have a 33 cm (13-inch) diameter span without any support, test specimens (herebelow named Alzeta) of the same ceramic fiber plates, taken from the perforated portion, were subjected to the three-point flexural test performed according to ASTM D 790-88 standard test method (Test Method I, Procedure A). Similar test specimens of Tennaglo® ceramic burner (U.S. patent 3,954,387) and of Schwank® ceramic burner (U.S. patent 2,775,294) were also subjected to ASTM D 790-86 standard test. The test could not be applied to the ceramic burners of U.S. patents 4,504,218 and 4,673,349, previously mentioned, because these burners are not being produced.

The test results are tabulated herebelow for easy comparison.

| Sample | (1) Load | (2)Deflection | (3)Stress | (4)Strain | (5)"Work" | (6)"Toughness" |
|---|---|---|---|---|---|---|
| Tennaglo | 5.00 | 0.020 | 155 | 0.003 | 0.07 | 0.519 |
| Schwank | 6.57 | 0.010 | 195 | 0.002 | 0.03 | 0.079 |
| Alzeta | 9.07 | 0.088 | 147 | 0.020 | 0.70 | 1.300 |

| | | | | | | |
|---|---|---|---|---|---|---|
| (1) maximum load in (founds) units of 4.54 g force | | | | | | |
| (2) deflection at failure in units of 25.4 mm (inches) | | | | | | |
| (3) maximum stress in units of 4.54 g (pounds) per 645 mm² (square inch) | | | | | | |
| (4) maximum strain in 2.54 cm (inches) per 2.54 cm (inch) | | | | | | |
| (5) area under curve plotted with (2) as abscissa and (1) as ordinate | | | | | | |
| (6) area under curve plotted with (4) as abscissa and (3) as ordinate | | | | | | |

It is significant that while the stress (3) values of the three burners are not materially different, the "toughness" (6) of the Alzeta burner far surpassed that of the other two burners: more than 16 times the Schwank burner and about 2.5 times the Tennaglo burner. It should be noted that the Tennaglo specimens had only 15% perforation area compared with 33% perforation area of the Alzeta specimens. Corrections were made in the stress, strain and "toughness" values for the slightly greater thickness of the Alzeta specimens.

It is believed that the "toughness" figure is the most critical parameter in many applications of the Alzeta perforated ceramic fiber plate. For example, a drop test requires the product to absorb a certain amount of energy to survive and "toughness" is a measure of the ability of the product to absorb energy and thus resist breakage. Likewise, strain (4) is critical in production in that it minimizes manufacturing control problems. The Alzeta product is also noteworthy for low thermal conductivity and low density which are certainly properties of value to the use of the product as a flameless infrared gas burner.

The performance tests in which the perforated ceramic fiber plate of this invention functioned as an infrared radiant gas burner with a 33 cm (13-inch) unsupported span below a water tank without sagging or fracturing demonstrated that the product is unique in providing the large, water heater industry with a long-desired infrared burner of low cost and reliable service. In spite of the many proposals in patents and perforated ceramic plates offered by manufacturers, a product comparable to that of the invention with regard to large size (example, 41.9 cm (16.5 inches) diameter), closeness of perforations (not exceeding 3.3 mm (0.13 inch) from center to center), "work" and "toughness" (both terms previously defined) has heretofore been unknown. Another feature of the new product is that it has these unparalleled properties in spite of the elimination of the conventional, costly sintering at temperatures above 538°C (1000°F). In short, the unsintered product of the invention has the further benefit of reduced manufacturing cost.

The outstanding physical properties of the new product are all the more surprising when it is realized that it is essentially a compact layer or pad of finely chopped ceramic fibers with closely spaced, small perforations, and a binding agent uniformly distributed throughout the layer and resulting from an inorganic sol dried at a temperature not exceeding about 343°C (650°F). The sol may be that of colloidal alumina or colloidal silica.

The compact pad or layer of finely chopped ceramic fibers 2. 5mm (maximum length about 0.10 inch) wet with a film of the sol of colloidal alumina or colloidal silica, when dried, becomes the novel product of this invention. Preferably, as in the specific example using colloidal alumina, the chopped ceramic fibers are at least 95% by weight of the product and the binding agent formed by the dried sol is only 5% by weight or less. Impregnating the product made with the dried sol of colloidal alumina with the sol of colloidal silica and redrying the product roughly doubles its weight.

The formulation of the suspension of chopped ceramic fibers given in the specific example of the invention may be varied. For example, the amount of acid is preferably controlled to yield a colloidal alumina solution with a pH in the range of about 2.5 to 3.5. The quantities of colloidal alumina and aluminum nitrate may also be varied but the viscosity of the acidic solution of colloidal alumina should not be materially different than that of the solution'of the example. High concentrations of colloidal alumina above about 4% that lead to clumping are undesirable. The use of an additive that influences viscosity, such as a polyvalent salt, preferably aluminum nitrate, is helpful in attaining a good viscosity for the suspension of the chopped ceramic fiber. Preferably, such a viscosity is in the range of about 400 to 600 mPa·s (400 to 600 centipoises), as measured in a Brookfield, LV Model, viscometer, with No. 1 spindle rotating at 6 revolutions per minute. The chopped fiber content given in the example was chosen after a series of tests with increasing fiber quantities. Obviously, lower fiber contents may be used but undesirably reduce the formation of fiber pad per gallon of filtered suspension. Somewhat higher contents are possible with slightly increased colloidal alumina usage.

When colloidal silica is used instead of colloidal alumina as the binding agent for the chopped ceramic fibers, the acidic solution thereof preferably has a pH in the aforesaid range of about 2.5 to 3.5 and a viscosity in the aforesaid range of about 400 to 800 mPa·s (400 to 800 centipoises).

Variations of the mold of the invention will be apparent to those skilled in the art particularly inasmuch as it requires only two basic components: a perforated filter or casting base and a base holding a myriad of pins that project through the perforated base, the two bases being movable toward and away from each other. Also, instead of applying vacuum to tube 22 of FIG. 2, the suspension of chopped ceramic fibers can be pumped into tube 21 at a pressure, say 6800 gm (15 pounds) per 645 mm² (square inch), to effect the same rapid deposition of chopped fibers around pins 14 and drainage of liquid through mold 10 achieved by applying vacuum to tube 22. Thus, the invention involves the deposition of chopped ceramic fibers on the casting base of the mold by pressurized filtration of the aqueous suspension of chopped fibers conducted by supplying the suspension to the mold at elevated pressure or preferably by applying vacuum to the discharge side of the mold. Accordingly, only such limitations should be imposed on the invention as are set forth in the appended claims.

## Claims

1. A process for producing a perforated ceramic fiber plate by pressured filtration of a suspension of chopped ceramic fibers in an aqueous dispersion of an inorganic binding agent elected from the group consisting of colloidal alumina and colloidal silica through a perforated filter base **characterised in that** the perforations of said filter bare have individual pins extending therethrough that are not more than 0.08 inch (2 mm) in diameter and are spaced from one another not more than 0.13 inch (3.3 mm) from center to center, said pins being held in a pin support base positioned adjacent the discharge side of said filter base and said pins projecting beyond said perforated filter base at least slightly more than the desired thickness of the pad of said chopped fibers being formed thereon, terminating said pressurized filtration when said pad of said chopped fibers has said desired thickness, withdrawing said pins from contact with said pad of said chopped fibers by moving said perforated filter base and said pin support base away from each other, removing said pad of said chopped fibers from said perforated filter base, and drying said pad of said chopped fibers to yield said perforated ceramic fiber plate.

2. The process of claim 1 wherein the pressurized filtration is conducted by applying vacuum to the discharge side of the perforated filter base and the binding agent is colloidal alumina with aluminum nitrate as an additive.

3. The process of claim 2 wherein the perforated filter base is circular and has a diameter in the range of about 14 to 18 inches (36 to 46 cm).

4. The process of any preceding claim wherein the pressurized filtration is terminated when the pad of chopped fibers is about 0.5 inch (13 mm) thick, and the drying of said pad of said chopped fibers is effected at a temperature not exceeding about 650°F (343°C).

5. The process of any preceeding claim wherein the diameter of the pin is about 0.25 mm (0.01 inch) less than the diameter of the perforations of the perforated filter base.

6. The process of any preceding claim wherein the ceramic fiber is chopped alumina silica fiber having a maximum length of about 2.5 mm (0.1 inch).

7. The process of claim 1 wherein the binding agent is colloidal silica and the pad of chopped fibers is dried at a temperature not exceeding about 232°C (450°F).

## Patentansprüche

1. Verfahren zur Herstellung einer perforierten Keramikfaserplatte durch Druckfiltration einer Suspension von zerkleinerten Keramikfasern in einer wässrigen Dispersion eines aus der aus kolloidalem Aluminiumoxid und kolloidalem Siliziumoxid bestehenden Gruppe ausgewählten anorganischen Bindemittels durch eine perforierte Filterbasis, **dadurch gekennzeichnet**, daß die Perforationen der Filterbasis einzelne sich hindurch erstreckende Stifte aufweisen, die im Durchmesser nicht größer als 2 mm (0,08 inches) und voneinander nicht mehr als 3,3 mm (0,13 inches) von Mitte zu Mitte beabstandet sind, die Stifte in einer Stifthalterungsbasis gehalten werden, die in der Nähe der Auslaßseite der Filterbasis angeordnet ist, und die Stifte über die perforierte Filterbasis mindestens etwas weiter als die gewünschte Dicke der darauf ausgebildeten Lage der zerkleinerten Fasern hinausragen, und die Druckfiltration beendet wird, wenn die Lage der zerkleinerten Fasern die gewünschte Dicke aufweist, die Stifte aus dem Kontakt mit der Lage der zerkleinerten Fasern zurückgezogen werden, indem die perforierten Filterbasis und die Stifthalterungsbasis voneinander weg bewegt werden, die Lage der zerkleinerten Fasern aus der perforierten Filterbasis entnommen wird, und die Lage der zerkleinerten Fasern getrocknet wird, um die perforierte Keramikfaserplatte zu erhalten.

2. Verfahren nach Anspruch 1, wobei die Druckfiltration durch Anlegen eines Vakuums an die Auslaßseite der perforierten Filterbasis betrieben wird und das Bindemittel kolloidales Aluminiumoxid mit Aluminiumnitrat als einem Zusatzmittel ist.

3. Verfahren nach Anspruch 2, wobei die perforierte Filterbasis kreisförmig ist und einen Durchmesser in dem Bereich von etwa 36 bis 46 cm (14 bis 18 inches) aufweist.

4. Verfahren nach einem der vorstehenden Ansprüche, wobei die Druckfiltration beendet wird, wenn die Lage der zerkleinerten Fasern etwa 13 mm (0,5 inches) dick ist und die Trocknung der Lage der zerkleinerten Fasern bei einer etwa 343°C (650°F) nicht überschreitenden Temperatur durchgeführt wird.

5. Verfahren nach einem der vorstehenden Ansprüche, wobei der Durchmesser des Stifts etwa 0,25 mm (0,01 inches) kleiner als der Durchmesser der Perforationen der perforierten Filterbasis ist.

6. Verfahren nach einem der vorstehenden Ansprüche, wobei die Keramikfaser eine zerkleinerte AluminiumoxidSiliziumoxidfaser mit einer maximalen Länge von etwa 2,5 mm (0,1 inches) ist.

7. Verfahren nach Anspruch 1, wobei das Bindemittel kolloidales Siliziumoxid ist und die Lage der zerkleinerten Fasern bei einer etwa 232°C (450°C) nicht überschreitenden Temperatur getrocknet wird.

## Revendications

1. Procédé de production d'une plaque perforée en fibres céramiques, par filtration sous pression d'une suspension de fibres céramiques découpées dans une dispersion aqueuse d'un agent de liaison inorganique choisi dans le groupe constitué de l'alumine colloïdale et de la silice colloïdale à travers une base perforée formant filtre, **caractérisé en ce que** les perforations de ladite base formant filtre ont des pointes individuelles s'étendant à travers cette dernière, lesquelles ne font pas plus de 0,08 pouce (2 mm) de diamètre et ne sont pas espacées les unes des autres de plus de 0,13 pouce (3,3 mm) de centre à centre, lesdites pointes étant maintenues dans une base de support de pointes positionnée de manière adjacente au côté refoulement de ladite base formant filtre et lesdites pointes dépassant au-delà de ladite base perforée formant filtre au moins légèrement plus que l'épaisseur souhaitée du bloc de dites fibres découpées en formation sur cette dernière, achevant ladite filtration sous pression lorsque ledit bloc de dites fibres découpées a ladite épaisseur souhaitée, retirant lesdites pointes de tout contact avec ledit bloc de dites fibres découpées en écartant ladite base perforée formant filtre et ladite base de support de pointes l'une de l'autre, enlevant ledit bloc de dites fibres découpées de ladite base perforée formant filtre, et séchant ledit bloc de dites fibres découpées pour donner ladite plaque perforée en fibres céramiques.

2. Procédé selon la revendication 1, dans lequel la filtration sous pression est effectuée en appliquant une aspiration au côté refoulement de la base perforée formant filtre et dans lequel l'agent de liaison est de l'alumine colloïdale avec du nitrate d'aluminium en tant qu'additif.

3. Procédé selon la revendication 2, dans lequel la base perforée formant filtre est circulaire et a un diamètre dans la plage d'environ 14 à 18 pouces (36 à 46 cm).

4. Procédé selon l'une quelconque des revendications précédentes, dans lequel la filtration sous pression est achevée lorsque le bloc de fibres découpées fait environ 0,5 pouce (13 mm) d'épaisseur, et dans lequel le séchage dudit bloc de dites fibres découpées est effectué à une température ne dépassant pas environ 650 °F (343 °C).

5. Procédé selon l'une quelconque des revendications précédentes, dans lequel le diamètre des pointes est d'environ 0,25 mm (0,01 pouce) inférieur au diamètre des perforations de la base perforée formant filtre.

6. Procédé selon l'une quelconque des revendications précédentes, dans lequel les fibres céramiques sont des fibres de silice alumine découpées ayant une longueur maximale d'environ 2,5 mm (0,1 pouce).

7. Procédé selon la revendication 1, dans lequel l'agent de liaison est de la silice colloïdale et dans lequel le bloc de fibres découpées est séché à une température ne dépassant pas environ 232 °C (450 °F).
